# EUROPEAN PATENT APPLICATION

(11) **EP 1 731 114 A1**
(43) Date of publication of application: **13.12.2006**
(21) Application number: 06114077.8
(22) Date of filing: 17.05.2006
(51) Int. Cl.: A61C 8/00, B25B 13/46, B25B 23/142, B25B 23/14

(54) **Wrench for dental implantology with ratchet and torque limiter**

(30) Priority: 09.06.2005 IT TO20050395
(71) Applicant: BAZZURRO, Andrea, 16011 Arenzano GE (IT)
(72) Inventor: BAZZURRO, Andrea, 16011 Arenzano GE (IT)
(74) Representative: Notaro, Giancarlo

(57) **Abstract**

A wrench that can be used in dental implantology and in orthopaedic surgery for screwing in the stage of surgery or in that of prosthesis has a single device that performs both the function of ratchet, to enable repeated manoeuvres of screwing without disengaging the wrench from the screw, and the function of applying maximum torque to the screw using the wrench.

## Description

The present invention relates to a wrench for tightening screws for fixing dental prostheses on osteo-integrated implants.

The problem of tightening the screw is particularly felt in the stage of surgery in implantology, when the dental surgeon has to connect the dental prosthesis definitively to the implant that is already osteo-integrated. At that moment, the problem is to screw, with extreme care, in order to prevent it from breaking, a screw that has a diameter of between 1.6 and 2 mm, by applying a given tightening torque of a value corresponding to the recommendations of the company supplying the implant, the prosthesis, and the screws themselves.

The problem of tightening the screw is particularly felt not only in the field of dental implantology but also in the field of general orthopaedic surgery, when there arises the need to use prostheses that are connected with special screws. On all these occasions, it is necessary to have available screwing means that enable simple operation, are reliable in use, and are able to guarantee the results obtained over time.

In the field of dental implantology there are currently available wrenches of various types, where the simplest is represented by the manual screwdriver referred to as "digital screwdriver". The use of a simple screwdriver leads to results that are linked to the sensitivity of the operator's hand.

In these sectors, there is also used a type of wrench, known as "ratchet wrench", that enables repeated cycles of tightening of the screw to be carried out without having to reposition the wrench between one cycle and the next. Also in this case, however, the results depend upon the sensitivity of the operator's hand.

The wrenches referred to above do not enable transmission to the operator of information on the value of the tightening torque applied.

Some wrenches used today envisage a torque-limiter device to check that the maximum torque established by the manufacturer is not exceeded.

It happens very frequently then that the dental surgeon prefers to use, for tightening the screw, a manual driving tool and to rely on the sensitivity of his hand.

This inefficient manual tightening of the screw, however, can give rise to an incorrect connection of the prostheses to the implants. The problem of loosening of the screws that grip the prosthesis to the implant continues to be the source of trouble and costs both for the patient and for the surgeon.

There moreover exist various types of torque wrenches pre-adjusted by the manufacturer for given torque values. These values must be accepted by the dental surgeon without any possibility of verification. This is the reason for the low diffusion of use of these wrenches.

The foregoing patent application No. TO 2003A000339, filed in the name of the present applicant, illustrates a wrench having the characteristics referred to in the pre-characterizing part of the annexed Claim 1, i.e., comprising:
- a first part of wrench for engagement in rotation on the fixing screw or on an intermediate tool for engagement of the screw; and
- a second part of wrench including the grip of the wrench, and connected in an articulated way to said first part,
in which the first part for engagement of the wrench includes a unidirectional ratchet that enables control of rotation of the screw by means of repeated cycles of oscillation of the wrench, each including an active, forward, stroke and a neutral, return, stroke, and
in which associated to the articulated connection between the two parts of the wrench is a torque-limiter device, designed to prevent a relative movement of the two parts of the wrench about said articulation until a pre-determined threshold value of the torque applied to the screw via the wrench is exceeded.

The purpose of the invention is to provide the dental surgeon, or the orthopaedic surgeon, with a wrench that will enable a secure and fast tightening to be obtained with a desired torque value and without the need to change the position of insertion of the wrench at the end of each active tightening stroke, and that will moreover have an extremely simple and functional structure.

With a view to achieving said purpose, the subject of the invention is a wrench for screwing during surgery or during application of a prosthesis in dental implantology and in orthopaedic surgery that presents all the characteristics referred to in the annexed Claim 1 and in particular is characterized in that it comprises a single ratchet device that performs both the function of ratchet and the function of torque limiter.

Further advantageous and preferred characteristics of the invention are referred to in the dependent claims.

Further characteristics and advantages of the present invention may be readily understood from the ensuing description with reference to the annexed plate of drawings, which are provided purely by way of nonlimiting example and in which:
- Figure 1 illustrates a preferred embodiment of the wrench forming the subject of the invention;
- Figure 2 is a cross-sectional illustration of a detail of the area of actuation of the ratchet of the wrench together with the operation of the system for controlling of the applied torque; and
- Figure 3 is a cross-sectional illustration of the detail of Figure 2, according to a plane Y-Y.

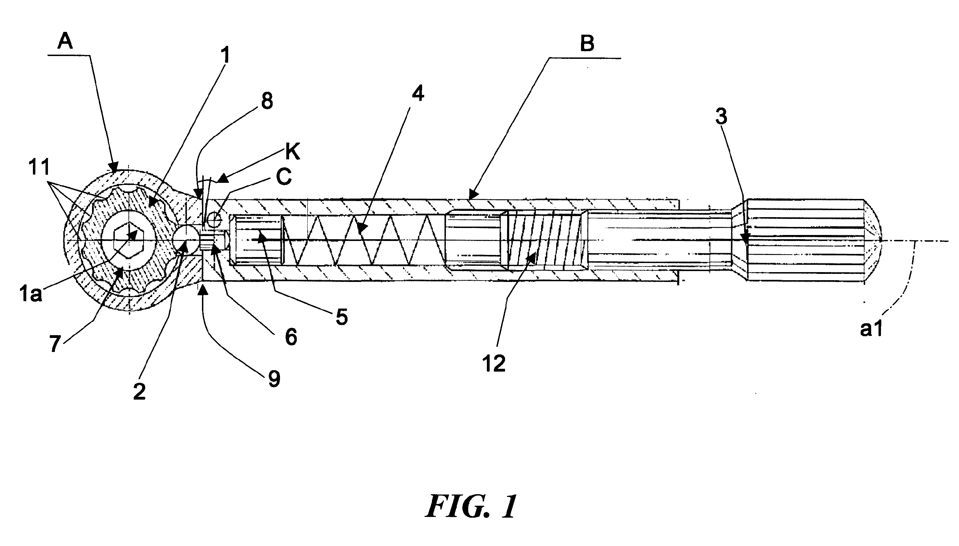

With reference to Figure 1, a wrench comprises a first part A of wrench for engagement in rotation on the fixing screw or on an intermediate tool for engagement of the screw, and a second part B of wrench including the grip of the wrench. The second part B of wrench is connected in an articulated way to the first part A of wrench by means of a pin C set at a distance from the axis a1 of the grip. The first part A for engagement of the wrench includes a ratchet, which will be described in detail in what follows, which enables control of rotation of the screw by means of repeated screwing cycles of oscillation of the wrench. The screwing cycles each include an active, forward, stroke and a neutral, return, stroke.

Associated to the articulated connection between the two parts A and B of the wrench is a torque-limiter device, which will be described in detail in what follows. The torque-limiter device is designed to prevent a relative movement of the two parts A and B of the wrench about the articulation C until a pre-determined threshold value of the torque applied to the screw via the wrench is exceeded in use.

The two parts A and B of the wrench are connected by means of the through pin C firmly connected with thread and conical Morse connection to the first part A of the wrench and free to rotate with its ends within the second part B of the wrench.

The wrench according to the present invention comprises a single device that fulfils both the function of ratchet and the function of torque limiter.

In a preferred embodiment of the present invention, the ratchet device comprises a grooved driven wheel 1, bearing a central hexagonal slot 1a for the screw or for an intermediate tool for engagement of the screw, and a member 2 for engagement of the wheel 1. The driven wheel 1 is mounted so that it can turn in the wrench, and the engagement member 2, in the example illustrated, it is in the form of a ball. The ball engagement member 2 is mounted within a radial hole of the first part A of the wrench and is pushed against the wheel 1 to co-operate with the circumferential series of seats 11 provided on the wheel 1 by a thrust element 6 mounted mobile in the second part B of the wrench. The thrust element 6, in the example illustrated in Figures 1 to 3, is in the form of a pin and is subject in turn to the thrust of a helical spring 4 through a shim 5. Of course, instead of a helical spring, different elastic means could be used, for example Belleville washers. The second part of wrench B contains within it, at one end thereof, an opposed resting screw element 3, engaged within a threaded end hole of the body of the grip B. The screw element 3, when tightened, compresses the spring 4 against the shim 5. The shim 5 is arrested by a shoulder of the hole that contains it. Resting against the shim 5 is the pin 6, which, with the other end is in contact with the ball member 2 against the wheel 1.

The ratchet device moreover comprises means for reducing the elastic load that pushes the ball member 2 against the wheel 1 when the wrench is turned in a direction opposite to that of application of the tightening torque to the screw.

In a preferred embodiment, with reference to Figure 1, the two parts of the wrench A and B have first surfaces 8 and second surfaces 9, which co-operate with one another. The surfaces are shaped so that a rotation about the axis of screwing a1, in one direction or in the other, impressed on the part B for gripping the wrench, is transmitted to the part A for engagement of the screw only after a first stroke K of mutual approach of the first surfaces 8 or of the second surfaces 9, respectively.

In this embodiment, the elastic load acting on the ball member 2 when the two first surfaces 8 are in contact with one another is lower than the elastic load acting on the ball member 2 when the second surfaces 9 are in contact with one another.

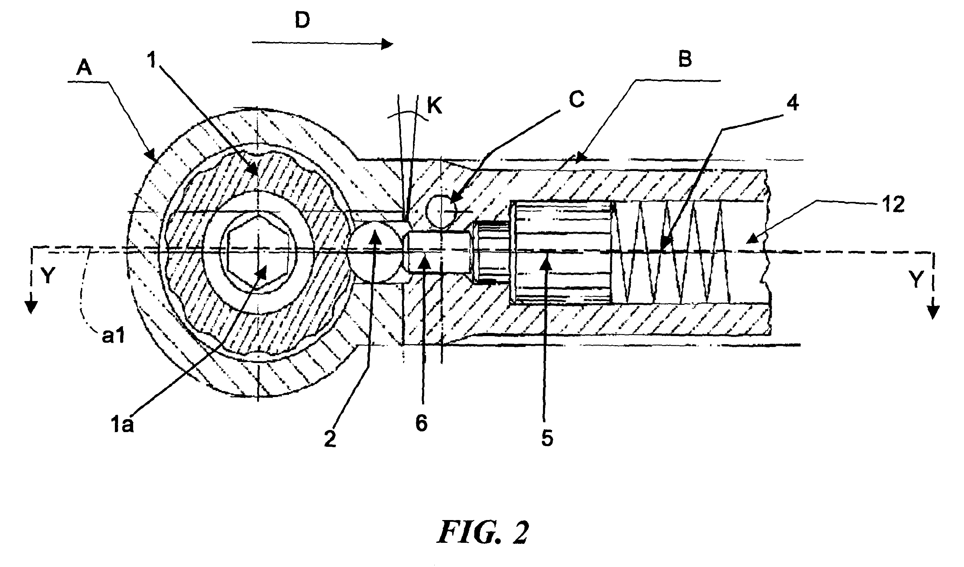

With particular reference to Figure 2, the ball member 2 and the pin 6 are aligned in a radial direction D coming out of the axis of screwing a3. The direction D substantially coincides with the axis of the grip a1. The axis of articulation a2 between the two parts A and B of the wrench is orthogonal to, and located at a distance from, the axis a1 of the grip of the wrench. The position of the axis of screwing a3 with respect to the axis of articulation a2 is such that the stroke K of mutual approach of the first co-operating surfaces 8 brings about a reduction in the load of the elastic means 4.

In the embodiment illustrated in the figures, the elastic means comprise a helical spring 4 mounted within a tubular body 12 of the grip B between the thrust pin 6 and the resting element 3 that is carried by the grip B of the wrench.

With particular reference to Figure 1, the screw element 3 is engaged within a threaded end hole of the body of the grip B for adjusting the load of the helical spring 4.

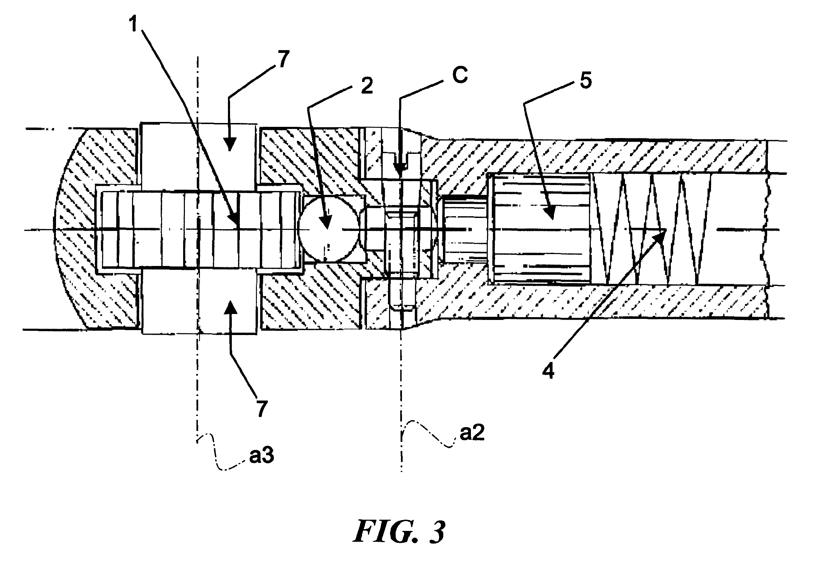

In the figures, the driven wheel 1 is a grooved wheel with opposed coaxial pins 7 (Figure 3), which are supported so that they can turn by the first part A of the wrench.

Consider the helical spring 4 compressed by means of the pin 3 for a certain value "v" of torque using the pre-adjustment device described in the preceding patent application No. TO 2003A000339, filed in the name of the present applicant.

At the end of the operation of adjustment, the shim 5 rests, with the force induced in the spring 4 by the adjustment, against the contrast of the hole, in which it may slide freely when, pushed by the ball 2 via the pin 6, it must press the spring, overcoming pre-loading thereof. The pin 6, the shim 5, and the ball 2 are in contact with one another. The ball 2 is housed for a depth of a few tenths of millimetres in one of the radial grooved seats of the wheel 1. The spring 4 is loaded, but does not yet transmit the load to the ball 2. With repetition of what has occurred in the operation of adjustment, once the adjusted torque is reached, the ball 2 will be pushed, by a further attempt at rotation of the wheel 1, out of its housing, generating a click at the instant of re-entry into the next housing. The ball 2 hence compresses the spring 4 via the shim 5 at the moment in which the pre-set limit value of torque is reached.

The shaped terminal of the screw is then connected to the central hexagonal slot 1a of the grooved wheel 1. With particular reference to Figure 2, a right-handed screwing is considered, i.e., in a clockwise direction. The second surfaces 9 are in complete contact, whilst the first surfaces 8 are separated by a stroke K. A first arc of rotation of the wrench is performed by impressing on the second, gripping, part B the force necessary to overcome the resistant screwing torque, which is hypothesized as being lower than the pre-set torque value. In this active step of tightening, the second part B of the wrench, via its connection with the ball 2, sets in rotation the wheel 1, which thus transmits, through the central hexagonal slot 1a, the torque applied to the screw during tightening. The resistant torque has attempted in this step to push the ball 2 out of the seat of the wheel, without, however, managing to, because it is hindered by the force of the spring 4 previously loaded to a value "v" of torque higher than what has so far been applied.

Suppose having performed a certain arc of tightening and the need to cause the wrench to perform a contrary rotation, consequently left-handed, so as to carry out a second positive rotation of the wrench.

Performing this operation without the aid of the ratchet (free wheel) would be useless because it would cause unscrewing of the part already screwed. In this case, it would then be necessary to remove the wrench and re-insert it in a new position in order to perform a second active rotation of the wrench.

Thanks to the presence of the ratchet, it is possible to perform a counterclockwise rotation of the wrench, which enables resumption of a new step of screwing by applying, however, a torque lower than the resistant torque.

This possibility is afforded by the action of the pin C, combined with a chamfer of the first surface 8 of the gripping part B of the wrench that creates the stroke K between the two first co-operating surfaces 8.

During the step of positive tightening (in the example presented, clockwise rotation), the stroke K due to the chamfer does not have any function. During the step of resumption, with counterclockwise rotation, the pressure exerted imposes on the grip B rotation about the pin C, thus bringing about nullification of the stroke K. The rotation of the grip B about the pin C moves the shim 5 away from the pin 6 so as to reduce the load on the spring 4, which is consequently not loaded, but rather is unloaded, during the return stroke. The counterclockwise rotation will hence require a torque lower than the resistant torque created in the clockwise rotation, thus preventing unscrewing of the screw.

Of course, without prejudice to the principle of the invention, the details of construction and the embodiments may vary widely with respect to what is described and illustrated herein purely by way of example, without thereby departing from the scope of the invention.

## Claims

1. A wrench for screws for fixing dental prostheses to osteo-integrated implants, comprising:
- a first part (A) of wrench for engagement in rotation on the fixing screw or on an intermediate tool for engagement of the screw; and
- a second part (B) of wrench including the grip of the wrench, and connected in an articulated way to said first part (A),
in which the aforesaid first part (A) for engagement of the wrench includes a ratchet (1, 2) that enables control of rotation of the screw by means of repeated cycles of oscillation of the wrench, each including an active, forward, stroke and a neutral, return, stroke, and
in which associated to the articulated connection (C) between the two parts (A, B) of the wrench is a torque-limiter device (4, 5, 6), designed to prevent a relative movement of the two parts (A, B) of the wrench about said articulation (C) until a pre-determined threshold value of the torque applied to the screw via the wrench is exceeded,
said wrench being **characterized in that** it comprises a single ratchet device (1, 2, 4, 5, 6), which performs both the function of ratchet (1, 2) and the function of torque limiter (4, 5, 6).

2. The wrench according to Claim 1, **characterized in that** said single ratchet device (1, 2, 4, 5, 6) comprises:
- a driven wheel (1), bearing the seat for the screw or for an intermediate tool for engagement of the screw, which is mounted so that it can turn in the wrench;
- a member (2) for engagement of the driven wheel (1), carried by the wrench and pushed elastically against the wheel (1), to co-operate with a circumferential series of seats (11) provided on the wheel (1); and
- means for reducing the elastic load that pushes the engagement member (2) against the wheel (1) when the wrench is turned in a direction opposite to that of application of the torque to the screw.

3. The wrench according to Claim 2, **characterized in that**:
- the two parts (A, B) of the wrench have first surfaces (8) and second surfaces (9) which co-operate with one another, being shaped so that a rotation about the axis of screwing (a3), in one direction or in the other, impressed on the gripping part (B) of the wrench, is transmitted to the part (A) for engagement of the screw only after a first stroke (K) of mutual approach, respectively, of said first co-operating surfaces (8) or of said second co-operating surfaces (9); and
- the elastic load acting on the engagement member (2) when the two aforesaid first co-operating surfaces (8) are in contact with one another is lower than the elastic load acting on the engagement member (2) when the two aforesaid second co-operating surfaces (9) are in contact with one another.

4. The wrench according to Claim 3, **characterized in that** the engagement member (2), for example in the form of a ball, is mounted so that it can slide radially in the first part (A) of the wrench and is pushed against the driven wheel (1) by a thrust element (6) mounted mobile in the second part (B) of the wrench and subject in turn to the thrust of elastic means (4).

5. The wrench according to Claim 4, **characterized in that** the engagement member (2) and the thrust element (6) are aligned in a radial direction (D) coming out of the axis of screwing (a3) and substantially coinciding with the axis of the grip (a1), and **in that** the axis of articulation (a2) between the two parts (A, B) of the wrench is orthogonal and set at a distance from said axis of the grip (a1), so that the aforesaid stroke (K) of mutual approach of said co-operating first surfaces (8) brings about a reduction of the load of said elastic means (4).

6. The wrench according to Claim 5, **characterized in that** said elastic means (4) are constituted by a helical spring or by Belleville washers mounted within a tubular body (12) of the grip between the aforesaid thrust element (6) and an opposed resting element (3) carried by the grip.

7. The wrench according to Claim 6, **characterized in that** the opposed resting element (3) is a screw element engaged within a threaded end hole of the body of the grip (B) for adjusting the load of the elastic means (4).

8. The wrench according to Claim 2, **characterized in that** said driven wheel (1) is a grooved wheel with coaxial opposed pins (7) that are supported so that they can turn by the first part (A) of the wrench.

9. The wrench according to Claim 8, **characterized in that** the grooves of the wheel can have any profile and depth suitable for the function envisaged.

10. The wrench according to Claim 2, **characterized in that** said wheel has a plurality of seats for housing the ball, which are positioned so that they are centred radially on the axis (a1) of the grip.
